# EUROPEAN PATENT SPECIFICATION

(11) **EP 3 594 306 B1**
(45) Date of publication and mention of the grant of the patent: **22.02.2023**
(21) Application number: 18774865.2
(22) Date of filing: 27.03.2018
(51) Int. Cl.: C09K 3/10, C08K 3/04, C08L 27/12, C08L 101/00, F16J 15/10, F16J 15/3284

(54) **COMPOSITION FOR SEAL MEMBER, AND SEAL MEMBER**
ZUSAMMENSETZUNG FÜR DICHTELEMENT UND DICHTELEMENT
COMPOSITION POUR ÉLÉMENT DE JOINT D'ÉTANCHÉITÉ ET ÉLÉMENT DE JOINT D'ÉTANCHÉITÉ

(30) Priority: 31.03.2017 JP 2017071924
(43) Date of publication of application: 15.01.2020
(73) Proprietor: Sanpo Rubber Industry Co., Ltd., Tokyo 136-0071 (JP)
(72) Inventor: IRIE, Shiori, Tokyo 136-0071 (JP); GUNJI, Yasuhiro, Tokyo 136-0071 (JP); YAMAMOTO, Noriaki, Tokyo 136-0071 (JP); YANAGAWA, Hajime, Tokyo 136-0071 (JP)
(74) Representative: Markfort, Iris-Anne Lucie
(86) International application number: PCT/JP2018/012489
(87) International publication number: WO 2018/181351

(56) References cited:
- WO-A1-2015/141442
- JP-A- 2003 155 382
- JP-A- 2017 057 915
- US-A- 5 587 424

## Description

### Technical Field

The present invention relates to a sealing member having slidability.

### Background Art

Rubber is suitable as a sealing member because it is capable of ensuring a sealing property by its own rubber elasticity (repulsive force). Meanwhile, rubber has a high coefficient of friction due to its viscoelastic properties, and therefore has no slidability. For this reason, in order to seal between sliding members accompanied by relative sliding by using rubber, it is necessary to improve the slidability of the rubber.

In general, a lubricant such as a resin is used to improve the slidability of rubber. For example, the slidability of rubber can be improved by coating the surface of the rubber with the lubricant (see, for example, Japanese Patent Application Laid-open No. 1995-227935). Further, there is also a technology for improving the slidability of rubber by dispersing a lubiricant in the rubber.
From US 5587424 A there is known a crosslinkable mixture and a process for forming dielectric particles includes admixing a vinyl halide monomer and a crosslinker in a liquid dispersion medium to form a first mixture. A second mixture of an initiator and a stabilizer is prepared and added to the first mixture to form a third mixture in which the monomer polymerizes to form white crystalline polymer particles which are sonified for uniformity. The particles may be stained by exposure to a dehydrohalegenation reagent and dispersed in an electrophoretic fluid for use in an electrophoretic display.
Reference is also made to JP 2003 155382 A disclosing a cross-linked rubber composition that comprises a rubber cross-linked with a peroxide and an acrylic modified polyorganosiloxane. The rubber is preferably any one or more kinds of ethylene-propylene rubber (EPR) and ethylene-propylene-diene rubber (EPDM). A sealing material comprises the cross-liked rubber composition and is represented by an O-ring or a packing. The sealing material is suitable for sliding parts of water supply, food producing equipment or medical and sanitary machinery and appliances. A method for producing the cross-linked rubber composition comprises cross-linking a cross- linkable rubber composition containing an uncross-linked rubber, a peroxide cross-linking agent and an acrylic-modified polyorganosiloxane.

### Disclosure of Invention

### Technical Problem

Fluorine rubber is excellent in heat resistance, oil resistance, and chemical resistance, and has a performance that is different from that of another synthetic rubber such as nitrile rubber. For this reason, a sealing member formed of fluorine rubber can be used for various purposes. Then, it is desired to use fluorine rubber for also a sealing member for sealing between sliding members.

However, the fluorine rubber has very high lubricity with respect to a general lubricant unlike other synthetic rubbers. For this reason, it is difficult to directly apply, to the fluorine rubber, the above-mentioned technology for improving the slidability of rubber by using the lubricant.

That is, even if the surface of the fluorine rubber is coated with a lubricant, the lubricant is not well retained on the surface of the fluorine rubber, and thus is easily peeled from the surface of the fluorine rubber. Further, it is difficult to disperse, in the fluorine rubber, a lubricant having a sufficient amount to improve the slidability of the fluorine rubber.

In view of the circumstances as described above, it is an object of the present invention to provide a technology for imparting favorable slidability to fluorine rubber.

### Solution to Problem

In order to achieve the above-mentioned object, a composition for a sealing member according to claim 1 is provided.

The particulate resin includes a compatible portion and a lubrication portion, the compatible portion having compatibility with the fluorine rubber component, the lubrication portion having lubricity with respect to the fluorine rubber component.

In this composition for a sealing member, the particulate resin is dispersed in the fluorine rubber component by the action of the compatible portion of the particulate resin.

By forming the composition for a sealing member while the particulate resin is sufficiently dispersed in the fluorine rubber component, the sealing member according to an embodiment of the present invention is obtained.

The particulate resin may contain not less than 40 weight% of silicone.
With this configuration, the slidability of the sealing member is further improved.

The particulate resin according to the invention is formed by a silicone-acrylic copolymer. With this configuration, the high slidability in the sealing member is maintained for a long time.

The composition for a seal member may further include carbon.
With this configuration, a sealing member having an appropriate hardness can be obtained.

A sealing member according to an embodiment of the present invention includes: fluorine rubber; and a particulate resin.

The particulate resin includes a compatible portion and a lubrication portion, the compatible portion having compatibility with the fluorine rubber, the lubrication portion having lubricity with respect to the fluorine rubber.

The particulate resin may be present on a surface of the sealing member.

In this sealing member, since rubber elasticity is achieved by the fluorine rubber, a favorable sealing property can be realized.

Further, it is possible to impart high slidability to the sealing member by the action of the lubrication portion of the particulate resin. Further, this sealing member has high durability because the particulate resin is hard to be removed from the surface of the sealing member by the action of the compatible portion of the particulate resin.

Therefore, this sealing member has both the sealing property and slidability.

The particulate resin is dispersed in the fluorine rubber.

The particulate resin may contain not less than 40 weight% of silicone.

The particulate resin is formed by a silicone-acrylic copolymer.

The sealing member may further include carbon distributed in the fluorine rubber.

### Advantageous Effects of Invention

As described above, in accordance with the present invention, it is possible to provide a technology for imparting favorable slidability to fluorine rubber.

### Brief Description of Drawings

[Fig. 1] Fig. 1 is a schematic diagram showing a cross section of a composition for a sealing member according to an embodiment of the present invention.
[Fig. 2] Fig. 2 is a schematic diagram showing a cross section of a particulate resin of the composition for a sealing member.
[Fig. 3A] Fig. 3A is a schematic diagram showing a cross section of the composition for a sealing member during molding.
[Fig. 3B] Fig. 3B is a schematic diagram showing a cross section of the composition for a sealing member during molding.
[Fig. 3C] Fig. 3C is a schematic diagram showing a partial cross section of a sealing member obtained by molding the composition for a sealing member.
[Fig. 4] Fig. 4 is a graph showing an example of an infrared spectrum obtained as a result of infrared absorption analysis of the sealing member.
[Fig. 5] Fig. 5 is a graph showing an example of a result of a slidability test.

### Mode(s) for Carrying Out the Invention

Hereinafter, an embodiment of the present invention will be described with reference to the drawings.

### 1. Schematic Configuration

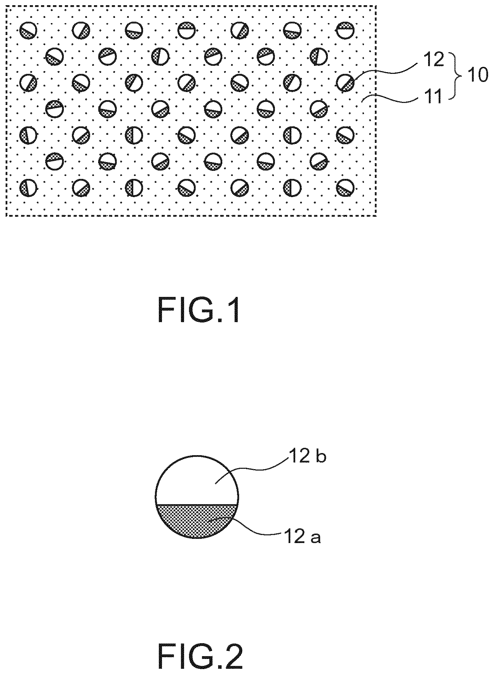

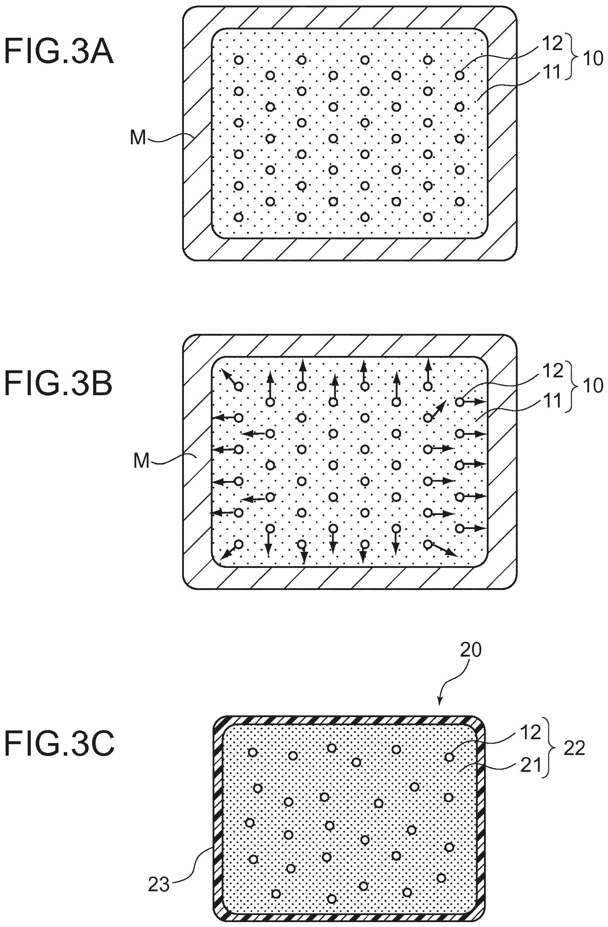

Fig. 1 is a schematic diagram showing a partial cross section of a composition 10 for a sealing member according to this embodiment. The composition for a sealing member 10 is configured as a raw material for producing a sealing member 20 (see Fig. 3C). That is, the sealing member 20 is obtained by molding the composition for a sealing member 10.

The composition for a sealing member 10 includes an uncrosslinked fluorine rubber component 11 and a particulate resin 12. The particulate resin 12 is particulate (powdered), and uniformly dispersed in the fluorine rubber component 11. The particulate resin 12 is configured as a lubrication component of the composition for a sealing member 10.

Fig. 2 is a schematic diagram showing an enlarged cross section of the particulate resin 12. Note that although the particulate resin 12 is shown in a spherical shape in Figs 1 and 2, the shape of the particulate resin 12 can be arbitrarily changed. Further, although all the particulate resins 12 have similar shapes in Figs. 1 and 2, the shape of each of the particulate resins 12 may differ.

The particulate resin 12 includes a compatible portion 12a having compatibility with fluorine rubber, and a lubrication portion 12b having lubricity with respect to the fluorine rubber. Note that although the compatible portion 12a and the lubrication portion 12b are shown separated in one direction in Fig. 2, the particulate resin 12 is not limited to such a configuration.

For example, the compatible portion 12a and the lubrication portion 12b may be distributed throughout the particulate resin 12. Further, the particulate resin 12 may have a configuration in which the compatible portion 12a is dispersed in the lubrication portion 12b or, conversely, a configuration in which the lubrication portion 12b is dispersed in the compatible portion 12a.

Here, assumption is made that a particulate resin includes only the lubrication portion 12b, i.e., the particulate resin does not include the compatible portion 12a. This particulate resin does not having compatibility with the fluorine rubber component 11, i.e., has only lubricity with respect to the fluorine rubber component 11, and therefore tends to be separated from the fluorine rubber component 11.

Therefore, even if such a particulate resin is tried to be dispersed in the fluorine rubber component 11, the particulate resin cannot remain in the fluorine rubber component 11 and is ejected out of the fluorine rubber component 11. For this reason, it is difficult to disperse such a particulate resin in the fluorine rubber component 11.

In this regard, the particulate resin 12 according to this embodiment includes the compatible portion 12a in addition to the lubrication portion 12b. Therefore, the particulate resin 12 is capable of remaining in the fluorine rubber component 11 due to the action of the compatible portion 12a. For this reason, it is possible to uniformly disperse the particulate resin 12 in the fluorine rubber component 11.

Note that in the process of producing the composition for a sealing member 10, it is favorable to knead a small amount of the fluorine rubber component 11 with respect to the particulate resin 12 before dispersing the particulate resin 12 in the fluorine rubber component 11. As a result, the dispersibility of the particulate resin 12 with respect to the fluorine rubber component 11 is further improved.

Figs. 3A to 3C are each a cross-sectional view schematically showing a method of producing the sealing member 20 using the composition for a sealing member 10. The composition for a sealing member 10 is molded as the sealing member 20 by an arbitrary method. Examples of the method of molding the composition for a sealing member 10 include an injection molding method, an extrusion molding method, and a press molding method.

Fig. 3A shows the state where a mold M is filled with the composition for a sealing member 10. The particulate resin 12 is uniformly dispersed in the fluorine rubber component 11 in the mold M. The shape of the mold M is determined in accordance with the shape of the sealing member 20, and the sealing member 20 having an arbitrary shape can be produced from the composition for a sealing member 10.

Fig. 3B shows the state where the composition for a sealing member 10 deposited in the mold M is heated. By heating the composition for a sealing member 10, crosslinking (primary vulcanization) of the fluorine rubber component 11 proceeds. Along with this, the particulate resin 12 dispersed in the fluorine rubber component 11 moves toward the surface due to the action of the lubrication portion 12b.

As a result, at least a part of the particulate resin 12 bleed out on the surface of the fluorine rubber component 11. The particulate resins 12 that have bleed out on the surface of the fluorine rubber component 11 are bonded to each other and integrated to form a surface layer portion 23 (see Fig. 3C) covering the fluorine rubber component 11.

When crosslinking of the fluorine rubber component 11 further progresses, the particulate resin 12 does not move. After the crosslinking of the fluorine rubber component 11 is finished, a molded body is taken out from the mold M. By performing secondary vulcanization on this molded body as necessary, the sealing member 20 is obtained.

Fig. 3C shows the sealing member 20 produced by molding the composition for a sealing member 10. The sealing member 20 includes a body portion 22 and the surface layer portion 23. The body portion 22 constitutes the shape of the sealing member 20. The surface layer portion 23 covers the surface of the body portion 22.

The body portion 22 is formed mainly of a fluorine rubber 21 produced by crosslinking the fluorine rubber component 11 contained in the composition for a sealing member 10. Further, in the body portion 22, the particulate resin 12 that has remained without bleeding on the surface of the fluorine rubber component 11 at the time of crosslinking is dispersed in the fluorine rubber 21.

The fluorine rubber 21 is excellent in heat resistance, oil resistance, and chemical resistance. For this reason, the sealing member 20 in which the body portion 22 is mainly formed of the fluorine rubber 21 is excellent in heat resistance, oil resistance, and chemical resistance. Therefore, the sealing member 20 achieves high durability in various applications.

Since the surface layer portion 23 is obtained by bonding the particulate resin 12, it includes the compatible portion 12a having compatibility with the fluorine rubber 21 and the lubrication portion 12b having lubricity with respect to the fluorine rubber 21. The surface layer portion 23 typically has a configuration in which the compatible portion 12a and the lubrication portion 12b are distributed throughout the surface layer portion 23.

The surface layer portion 23 formed on the surface of the sealing member 20 has high slidability due to the action of the lubrication portion 12b that is a self-lubricating component. Therefore, the sealing member 20 can achieve high slidability that cannot be achieved by only the fluorine rubber 21 because the surface layer portion 23 functions as a solid lubricating film.

Further, the surface layer portion 23 can achieve a high adhesion force of the surface layer portion 23 to the body portion 22 (fluorine rubber 21) by the action of the compatible portion 12a. As a result, the surface layer portion 23 has high durability because it becomes hard to peel from the body portion 22. Therefore, the sealing member 20 maintains high slidability for a long time.

Further, in the sealing member 20, the particulate resin 12 is caused to bleed out at the time of molding to form the surface layer portion 23. Thus, even in a complicated shape, it is possible to easily form the surface layer portion 23 in the entire area of the surface of the body portion 22 without a gap. As a result, the sealing member 20 achieves high slidability more reliably.

In addition, in the sealing member 20, since the particulate resin 12 is dispersed in the body portion 22, the particulate resin 12 is present on the surface of the body portion 22. Therefore, even in the case where the surface layer portion 23 is worn and the body portion 22 is exposed, the sealing member 20 is capable of ensuring slidability.

Note that in the sealing member 20, in the case where it is sufficient that high slidability by the surface layer portion 23 is obtained, the particulate resin 12 does not need to be dispersed in the body portion 22. That is, all the particulate resins 12 contained in the composition for a sealing member 10 may form the surface layer portion 23 of the sealing member 20.

Further, in the sealing member 20, the particulate resin 12 only needs to be present on the surface thereof, and the particulate resin 12 does not necessarily need to form the film-shaped surface layer portion 23. That is, the sealing member 20 does not necessarily need to have a configuration in which the body portion 22 and the surface layer portion 23 can be clearly distinguished from each other.

Further, in the sealing member 20, the particulate resin 12 only needs to be present on the surface thereof, and it does necessarily need to cause the particulate resin 12 to bleed out at the time of molding. In this case, in the sealing member 20, the concentration of the particulate resin 12 may be approximately the same between the surface and the inside, or the concentration of the particulate resin 12 may be higher inside than on the surface.

### 2. Detailed Configuration

### 2.1 Sealing Member 20

### 2.1.1 Surface Layer Portion 23 and Particulate Resin 12

The resin forming the surface layer portion 23 and the particulate resin 12 of the sealing member 20 only needs to be a resin including the compatible portion 12a having compatibility with the fluorine rubber 21, and the lubrication portion 12b having lubricity with respect to the fluorine rubber 21. The configuration of the compatible portion 12a and the lubrication portion 12b in such a resin is not limited to a specific one.

As an example, a silicone resin, which has favorable slidability and a main skeleton of silicone having low surface energy, can be used as the resin forming the surface layer portion 23 and the particulate resin 12. In the silicone resin, the main skeleton of silicone becomes a self-lubricating component, and functions as the lubrication portion 12b.

The silicone forming the silicone resin is not limited to a specific type one. Specific examples thereof include dimethyl silicone, methylphenyl silicone, amino-modified silicone, and epoxy-modified silicone.

Further, in the silicone resin, the configuration that functions as the compatible portion 12a may be bonded to the main skeleton of silicone. The configuration that functions as the compatible portion 12a only needs to have compatibility with the fluorine rubber 21, and can be realized by using, for example, various functional groups or various resins (e.g., acrylic resin).

The silicone resin favorably contains 40 weight% or more of silicone in order to achieve sufficient lubricity. As a result, sufficiently high slidability can be achieved in the surface layer portion 23. Further, a sufficient amount of the particulate resin 12 bleeds out at the time of molding of the sealing member 20, and thus, the surface layer portion 23 is favorably formed.

The silicone resin imparted with compatibility with the fluorine rubber 21 can be selected from commercially available products depending on the application of the sealing member 20, or the like. For example, such a silicone resin can be selected from Chaline (registered trademark) series, which is a silicone-acrylic copolymer manufactured by Nissin Chemical Industry Co., Ltd.

### 2.1.2 Fluorine Rubber 21

The fluorine rubber 21 constituting the body portion 22 of the sealing member 20 is not limited to a specific one as long as it is rubber containing a fluorine atom. As the fluorine rubber 21, for example, vinylidene fluoride fluororubber (FKM) mainly formed of vinylidene fluoride can be used.

More specifically, as the binary fluorine rubber 21, for example, vinylidene fluoride-hexafluoropropylene-, vinylidene fluoride-chlorotrifluoroethylene-, tetrafluoroethylene-perfluoro-, or tetrafluoroethylene-propylene-based one can be used.

As the ternary fluorine rubber 21, for example, vinylidene fluoride-hexafluoropropylene-tetrafluoroethylene-, vinylidene fluoride-perfluoroalkyl vinyl ether-tetrafluoroethylene-, or tetrafluoroethylene-propylene-vinylidene fluoride-based one can be used. These ternary fluorine rubbers 21 are generally excellent in cold resistance.

Further, as the fluorine rubber 21, a single type one may be used or a plurality of types may be combined for use. The degree of polymerization of the fluorine rubber 21 can be determined in accordance with the application of the sealing member 20 or the like so that an appropriate sealing property or slidability can be achieved.

### 2.1.3 Additive

The body portion 22 of the sealing member 20 may contain an additive other than the fluorine rubber 21 and the particulate resin 12 as necessary. For example, the body portion 22 may contain a curing agent for increasing the hardness as an example. As the curing agent, for example, powdery carbon (carbon black or the like) can be used.

Further, the body portion 22 may contain various additives such as a filler, a reinforcing material, and a pigment other than the curing agent.

### 2.2 Composition for Sealing Member 10

### 2.2.1 Fluorine Rubber Component 11 and Particulate Resin 12

The configuration of the fluorine rubber component 11, and the particulate resin 12 in the composition for a sealing member 10 is determined in accordance with the configuration of the sealing member 20. The content of the particulate resin 12 in the composition for a sealing member 10 is not less than 0.5 parts by weight and not more than 50 parts by weight on the basis of 100 parts by weight of the fluorine rubber component 11.

By setting the content of the particulate resin 12 to not less than 0.5 parts by weight, a sufficient amount of the particulate resin 12 bleeds out at the time of molding, and thus, the favorable surface layer portion 23 is formed. Further, by keeping the content of the particulate resin 12 at not more than 50 parts by weight, a favorable sealing property can be easily achieved by the action of the fluorine rubber 21 in the sealing member 20.

Further, from the same viewpoint, the content of the particulate resin 12 in the composition for a sealing member 10 is favorably not less than 1 part by weight and not more than 20 parts by weight on the basis of 100 parts by weight of the fluorine rubber component 11. As a result, the sealing member 20 having both more favorable slidability and a more favorable sealing property can be achieved.

### 2.2.2 Additive

Also the additive in the composition for a sealing member 10 is determined in accordance with the configuration of the sealing member 20. That is, the composition for a sealing member 10 may contain the curing agent described above. Further, the composition for a sealing member 10 may contain various additives such as a filler, a reinforcing material, and a pigment other than the curing agent.

Further, the composition for a sealing member 10 may contain a crosslinking agent for crosslinking the fluorine rubber component 11 in advance. The crosslinking agent is not limited to a specific one. For example, the crosslinking agent can be selected from commercially available crosslinking agents. As the crosslinking agent, for example, a polyamine crosslinking-, polyol crosslinking-, or peroxide crosslinking-based one can be used.

Further, the composition for a sealing member 10 may contain a processing aid. Examples of the processing aid include a fatty acid such as stearic acid and fatty acid metal salt. However, the processing aid hinders the movement of the particulate resin 12 during crosslinking of the fluorine rubber component 11, i.e., hinders formation of the surface layer portion 23 in some cases.

From such a viewpoint, the amount of the processing aid is favorably small. Specifically, it is favorable to keep the amount of the processing aid at not more than 3 parts by weight on the basis of 100 parts by weight of the fluorine rubber component 11. Further, it is more favorable that the composition for a sealing member 10 does not substantially contain a processing aid. Specifically, it is more favorable that the amount of the processing aid is kept at not more than 0.1 parts by weight.

In addition, the composition for a sealing member 10 may contain various additives such as a crosslinking aid and a retarder as necessary.

### 3. Examples and Comparative Examples

Hereinafter, Examples and Comparative Examples of this embodiment will be described. However, the present invention is not limited to the configuration described below. Note that the same fluorine rubber component 11 is used in also any of Examples and Comparative Examples described below.

### 3.1 Examples 1-1 to 1-5, Comparative Examples 1-1 to 1-12

### 3.1.1 Sample according to Example 1-1

In Example 1-1, as the particulate resin 12 of the composition for a sealing member 10, one (lubricant 1) having the content of silicone of 70 weight% among Chaline (registered trademark) series manufactured by Nissin Chemical Industry Co., Ltd. was used. In Example 1-1, the content of the particulate resin 12 was set to 20 parts by weight on the basis of 100 parts by weight of the fluorine rubber component 11.

In Example 1-1, after kneading the composition for a sealing member 10 having the above-mentioned configuration, it was molded by the primary vulcanization at 170°C for 10 minutes into a spherical shape of 20 mm in outer diameter. Subsequently, secondary vulcanization was performed at 230°C for 4 hours on the spherical molded body. As a result, a sample of the sealing member 20 was obtained.

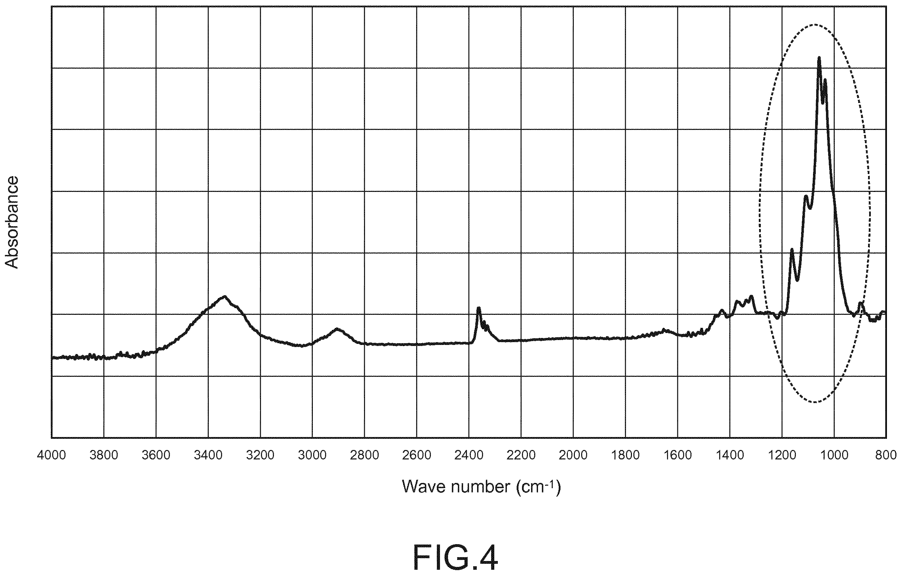

Fig. 4 shows an infrared spectrum obtained as a result of infrared absorption analysis of the surface of the sample of the sealing member 20. In the infrared spectrum shown in Fig. 4, a peak of absorbance of silicone is observed in a region surrounded by broken lines with a wave number of approximately 1100 cm⁻¹. In accordance therewith, it has been confirmed that the particulate resin 12 is present on the surface of the sample.

### 3.1.2 Samples according to Examples 1-2 to 1-5

In Examples 1-2 to 1-5, samples of the sealing member 20 were prepared using the composition for a sealing member 10 in which the configuration of the particulate resin 12 is different from that of the composition for a sealing member 10 used in Example 1-1. Conditions for preparing each sample of the sealing member 20 according to Examples 1-2 to 1-5 were the same as that in Example 1-1.

In Examples 1-2 to 1-5, the content of the particulate resin 12 (lubricant 1) is different from that of Example 1-1. Specifically, the content of the particulate resin 12 on the basis of 100 parts by weight of the fluorine rubber component 11 was 10 parts by weight in Example 1-2, 5 parts by weight in Example 1-3, 1 part by weight Example 1-4, and 0.5 parts by weight in Example 1-5.

### 3.1.3 Samples according to Comparative

### Examples 1-1 to 1-12

In Comparative Examples 1-1 to 1-12, samples of a sealing member were prepared using a composition for a sealing member having a configuration different from that of the composition for a sealing member 10 according to this embodiment. Conditions for preparing the samples of a sealing member according to Comparative Examples 1-1 to 1-12 were the same as that in Example 1-1.

In Comparative Examples 1-1 and 1-2, the content of the particulate resin 12 (lubricant 1) is less than that in this embodiment. Specifically, in Comparative Example 1-1, the content of the particulate resin 12 on the basis of 100 parts by weight of the fluorine rubber component 11 was 0.1 parts by weight. In Comparative Example 1-2, the content of the particulate resin 12 is 0 parts by weight, i.e., the particulate resin 12 is not used.

In Comparative Example 1-3, instead of the particulate resin 12 according to this embodiment, silicone oil (lubricant 2) was used. However, since the silicone oil has high lubricity with respect to the fluorine rubber component 11, it has been separated without being mixed with the fluorine rubber component 11. As a result, no sample of a sealing member was obtained in Comparative Example 1-3.

In Comparative Examples 1-4 to 1-12, samples of a sealing member were prepared using a composition for a sealing member containing a lubricant having a configuration different from that of the particulate resin 12 according to this embodiment. The configuration of the lubricant used in Comparative Examples 1-4 to 1-12 is different from that of the particulate resin 12 in that it does not include at least one of the compatible portion 12a and the lubrication portion 12b.

In Comparative Examples 1-4 to 1-6, respectively, lubricants 3 to 5, which were general lubricants, were used. In Comparative Examples 1-7 to 1-12, respectively, lubricants 6 to 11, which were general processing aids (such as mold release agents) having a lubricity function, were used. Specifically, the lubricants 3 to 11 used in Comparative Examples 1-4 to 1-12 are as follows.
Lubricant 3: Oleic acid amide ("Armoslip CP" manufactured by Lion Corporation.)
Lubricant 4: Teflon powder
Lubricant 5: Mixed lubricant mainly formed of fatty acid calcium salt ("Struktol WB16" manufactured by S&S Japan Co., LTD.)
Lubricant 6: Fatty acid zinc salt ("Exton L-2" manufactured by Kawaguchi Chemical Industry Co., LTD.)
Lubricant 7: Mixing agent of fatty acid metal salt and fatty acid glyceride ("Exton L-7" manufactured by Kawaguchi Chemical Industry Co., LTD.)
Lubricant 8: Aluminum stearate and calcium stearate
Lubricant 9: Paraffin-type special wax ("Suntight S" manufactured by Seiko Chemical Co.,Ltd.)
Lubricant 10: Methyl cellulose
Lubricant 11: Stearylamine ("FARMIN 80T" manufactured by Kao Corporation.)

### 3.1.4 Evaluation of Each Sample

A slidability test was conducted on the samples obtained in Examples 1-1 to 1-5 and Comparative Examples 1-1, 1-2, and 1-4 to 1-12. As a counterpart material to be slid, a plate material having a surface roughness Ra of 0.4 um, on which hard chrome plating was performed, was used. The slidability test was conducted in a state where each sample was sandwiched with the counterpart material and compressed by 40%.

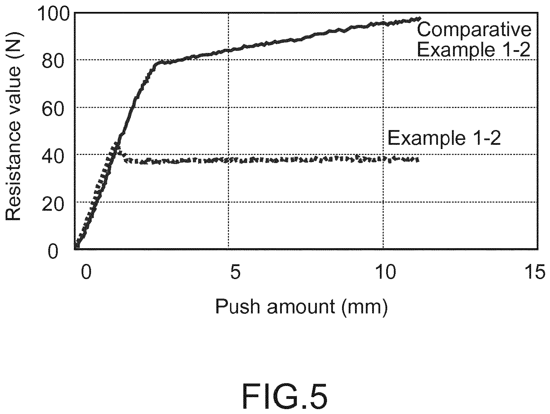

In the slidability test, a sample sandwiched with the counterpart material was placed on a testing machine (Autograph manufactured by Shimadzu Corporation.), and the resistance value (load) when the center part of the sample pushed in at a speed of 50 mm/min in the direction along the surface of the counterpart material was measured. As a result, for example, a graph as shown in Fig. 5 is obtained.

Fig. 5 is a graph showing an example of the result of the slidability test. In Fig. 5, the results obtained for the samples according to Example 1-2 and Comparative Example 1-2 are shown. It can be seen that in the example according to Example 1-2, the resistance value after starting sliding is lower than that of the sample according to Comparative Example 1-2.

The slidability of each sample was evaluated on the basis of the resistance value when the sample was pushed in by 10 mm. The evaluation criteria of slidability of each sample were A to D shown below.
A: Resistance value is not more than 40N.
B: Resistance value is not more than 50N.
C: Resistance value is not more than 70N.
D: Resistance value exceeds 70N.

Table 1 shows the evaluation results of the slidability of the samples according to Examples 1-1 to 1-5 and Comparative Examples 1-1, 1-2, and 1-4 to 1-12. Note that regarding Comparative Example 1-3 in which a sample of a sealing member was not obtained, the slidability was not evaluated. Further, Table 1 shows the content (parts by weight) of each component of each sample.

**[Table 1]**

| | Example 1-1 | Example 1-2 | Example 1-3 | Example 1-4 | Example 1-5 | Comparative Example 1-1 | Comparative Example 1-2 | Comparative Example 1-3 | Comparative Example 1-4 | Comparative Example 1-5 | Comparative Example 1-6 | Comparative Example 1-7 | Comparative Example 1-8 | Comparative Example 1-9 | Comparative Example 1-10 | Comparative Example 1-11 | Comparative Example 1-12 |
|---|---|---|---|---|---|---|---|---|---|---|---|---|---|---|---|---|---|
| Fluorine rubber component | 100 | 100 | 100 | 100 | 100 | 100 | 100 | 100 | 100 | 100 | 100 | 100 | 100 | 100 | 100 | 100 | 100 |
| Carbon | 70 | 70 | 70 | 70 | 70 | 70 | 70 | 70 | 70 | 70 | 70 | 70 | 70 | 70 | 70 | 70 | 70 |
| Lubricant 1 | 20 | 10 | 5 | 1 | 0.5 | 0.1 | | | | | | | | | | | |
| Lubricant 2 | | | | | | | | 10 | | | | | | | | | |
| Lubricant 3 | | | | | | | | | 10 | | | | | | | | |
| Lubricant 4 | | | | | | | | | | 10 | | | | | | | |
| Lubricant 5 | | | | | | | | | | | 10 | | | | | | |
| Lubricant 6 | | | | | | | | | | | | 10 | | | | | |
| Lubricant 7 | | | | | | | | | | | | | 10 | | | | |
| Lubricant 8 | | | | | | | | | | | | | | 10 | | | |
| Lubricant 9 | | | | | | | | | | | | | | | 10 | | |
| Lubricant 10 | | | | | | | | | | | | | | | | 10 | |
| Lubricant 11 | | | | | | | | | | | | | | | | | 10 |
| Slidability | A | A | A | B | C | D | D | - | D | D | D | D | D | D | D | D | D |

As shown in Table 1, in any of the samples according to Examples1-1 to 1-5 in which the content of the particulate resin 12 on the basis of 100 parts by weight of the fluorine rubber component 11 was not less than 0.5 parts by weight, the resistance value was not less than 70 N and favorable slidability was achieved. Therefore, it was confirmed that the sealing member 20 according to this embodiment, favorable slidability was achieved.

Further, in Examples 1-1 to 1-4 in which the content of the particulate resin 12 was not less than 1 part by weight on the basis of 100 parts by weight of the fluorine rubber component 11, the resistance value was not more than 50 N and more favorable slidability was achieved. Therefore, it is favorable that the content of the particulate resin 12 in the composition for a sealing member 10 is not less than 1 part by weight.

Further, in Examples 1-1 to 1-3 in which the content of the particulate resin 12 was not less than 5 parts by weight on the basis of 100 parts by weight of the fluorine rubber component 11, the resistance value was not more than 40 N and particularly favorable slidability was achieved. Therefore, it is particularly favorable that the content of the particulate resin 12 in the composition for a sealing member 10 is not less than 5 parts by weight.

Meanwhile, in any of the samples according to Comparative Examples1-1, 1-2, and 1-4 to 1-12 in which the configuration is different from that in this embodiment, the resistance value exceeds 70 N and favorable slidability was not achieved. Therefore, it was confirmed that in the sealing member 20 according to this embodiment, slidability higher than that of any of the sealing members according to Comparative Examples could be achieved.

### 3.2 Examples 2-1 to 2-9

In Examples 2-1 to 2-9, samples of the sealing member 20 were prepared by molding the composition for a sealing member 10 having a different content of carbon under the same conditions as those in Examples 1-1. Then, the slidability of each sample was evaluated similarly to Examples 1-1 to 1-5 and Comparative Examples 1-1, 1-2, and 1-4 to 1-12 described above.

Table 2 shows the evaluation results of the samples according to Examples 2-1 to 2-9. Further, Table 2 shows the contents (parts by weight) of carbon and the lubricant 1 of each sample. Note that in Example 2-1, the content of carbon is 0 part by weight, i.e., carbon is not used.

**[Table 2]**

| | Example 2-1 | Example 2-2 | Example 2-3 | Example 2-4 | Example 2-5 | Example 2-6 | Example 2-7 | Example 2-8 | Example 2-9 |
|---|---|---|---|---|---|---|---|---|---|
| Fluorine rubber component | 100 | 100 | 100 | 100 | 100 | 100 | 100 | 100 | 100 |
| Carbon | 0 | 10 | 20 | 30 | 40 | 50 | 60 | 70 | 80 |
| Lubricant 1 | 10 | 10 | 10 | 10 | 10 | 10 | 10 | 10 | 10 |
| Slidability | B | B | B | B | A | A | A | A | A |

As shown in Table 2, in any of the samples according to Examples2-1 to 2-9, the resistance value was not more than 50 N and favorable slidability was achieved. Further, in Examples 2-5 to 2-9 in which the content of carbon was not less than 40 parts by weight, the resistance value was not more than 40 N and particularly favorable slidability was achieved.

### 4. Other Embodiments

Although an embodiment of the present invention has been described above, it goes without saying that the present invention is not limited to only the above-mentioned embodiment and various modifications can be made without departing from the essence of the present invention.

### Reference Signs List

- 10: composition for a sealing member
- 11: fluorine rubber component
- 12: particulate resin
- 12a: compatible portion
- 12b: lubrication portion
- 20: sealing member
- 21: fluorine rubber
- 22: body portion
- 23: surface layer portion
- M: mold

## Claims

1. A composition for a sealing member, comprising:
100 parts by weight of an uncrosslinked fluorine rubber component; and
1 to 20 (inclusive) parts by weight of a particulate resin, the particulate resin including a compatible portion and a lubrication portion, the compatible portion having compatibility with the fluorine rubber component, the lubrication portion having lubricity with respect to the fluorine rubber component, wherein the particulate resin is formed by a silicone-acrylic copolymer, and wherein the particulate resin is dispersed in the fluorine rubber.

2. The composition for a sealing member according to claim 1, wherein the particulate resin contains not less than 40 weight% of silicone.

3. The composition for a sealing member according to any one of claims 1 or 2, further comprising carbon.

4. A sealing member, comprising: 100 parts by weight of an uncrosslinked fluorine rubber component; and
1 to 20 (inclusive) parts by weight of a particulate resin;
Wherein the particulate resin includes a compatible portion and a lubrication portion, the compatible portion having compatibility with the fluorine rubber, the lubrication portion having lubricity with respect to the fluorine rubber, wherein the particulate resin is formed by a silicone-acrylic copolymer, and wherein the particulate resin is dispersed in the fluorine rubber.

5. The sealing member according to claim 4, wherein
the particulate resin is present on a surface of the sealing member.

6. The sealing member according to claim 4, wherein
the particulate resin contains not less than 40 weight% of silicone.

7. The sealing member according to any one of claims 4 to 6, further comprising
carbon distributed in the fluorine rubber.

## Patentansprüche

1. Zusammensetzung für ein Dichtungselement, umfassend:
100 Gewichtsteile einer unvernetzten Fluorkautschukkomponente; und
1 bis 20 (einschließlich) Gewichtsteile eines teilchenförmigen Harzes, wobei das teilchenförmige Harz einen kompatiblen Anteil und einen Schmieranteil enthält, wobei der kompatible Anteil Kompatibilität mit der Fluorkautschukkomponente aufweist, der Schmieranteil Schmierfähigkeit in Bezug auf die Fluorkautschukkomponente aufweist, wobei das teilchenförmige Harz durch ein Silicon-Acryl-Copolymer gebildet wird und wobei das teilchenförmige Harz in dem Fluorkautschuk dispergiert ist.

2. Zusammensetzung für ein Dichtungselement nach Anspruch 1, wobei das teilchenförmige Harz nicht weniger als 40 Gew.-% Silikon enthält.

3. Zusammensetzung für ein Dichtungselement nach einem der Ansprüche 1 oder 2, die außerdem Kohlenstoff enthält.

4. Dichtungselement, umfassend:
100 Gewichtsteile einer unvernetzten Fluorkautschukkomponente; und
1 bis 20 (einschließlich) Gewichtsteile eines teilchenförmigen Harzes;
wobei das teilchenförmige Harz einen kompatiblen Teil und einen schmierenden Teil enthält, wobei der kompatible Teil mit dem Fluorkautschuk kompatibel ist und der schmierende Teil in Bezug auf den Fluorkautschuk Schmierfähigkeit aufweist, wobei das teilchenförmige Harz durch ein Silicon-Acryl-Copolymer gebildet wird und wobei das teilchenförmige Harz in dem Fluorkautschuk dispergiert ist.

5. Dichtungselement nach Anspruch 4, wobei
das teilchenförmige Harz auf einer Oberfläche des Dichtungselements vorhanden ist.

6. Dichtungselement nach Anspruch 4, wobei
das teilchenförmige Harz nicht weniger als 40 Gew.-% Silikon enthält.

7. Dichtungselement nach einem der Ansprüche 4 bis 6, ferner umfassend
Kohlenstoff, der in dem Fluorkautschuk verteilt ist.

## Revendications

1. Composition pour un élément d'étanchéité, comprenant :
100 parties en poids d'un composant caoutchouc fluoré non réticulé; et
1 à 20 (inclus) parties en poids d'une résine particulaire, la résine particulaire comprenant une partie compatible et une partie lubrifiante, la partie compatible ayant une compatibilité avec le composant caoutchouc fluoré, la partie lubrifiante ayant un pouvoir lubrifiant par rapport au composant caoutchouc fluoré, dans laquelle la résine particulaire est formée par un copolymère silicone-acrylique, et dans laquelle la résine particulaire est dispersée dans le caoutchouc fluoré.

2. Composition pour un élément d'étanchéité selon la revendication 1, dans laquelle la résine particulaire ne contient pas moins de 40 % en poids de silicone.

3. Composition pour un élément d'étanchéité selon l'une quelconque des revendications 1 ou 2, comprenant en outre du carbone.

4. Elément d'étanchéité, comprenant :
100 parties en poids d'un composant caoutchouc fluoré non réticulé; et
1 à 20 (inclus) parties en poids d'une résine particulaire ;
dans lequel la résine particulaire comprend une partie compatible et une partie lubrifiante, la partie compatible ayant une compatibilité avec le caoutchouc fluoré, la partie lubrifiante ayant un pouvoir lubrifiant par rapport au caoutchouc fluoré, dans lequel la résine particulaire est formée par un copolymère silicone-acrylique, et dans lequel la résine particulaire est dispersée dans le caoutchouc fluoré.

5. Elément d'étanchéité selon la revendication 4, dans lequel
la résine particulaire est présente sur une surface de l'élément d'étanchéité.

6. Elément d'étanchéité selon la revendication 4, dans lequel
la résine particulaire ne contient pas moins de 40 % en poids de silicone.

7. Elément d'étanchéité selon l'une quelconque des revendications 4 à 6, comprenant en outre.
du carbone réparti dans le caoutchouc fluoré.
